# EUROPEAN PATENT APPLICATION

(11) **EP 1 574 591 A1**
(43) Date of publication of application: **14.09.2005**
(21) Application number: 03811096.1
(22) Date of filing: 10.11.2003
(51) Int. Cl.: C22C 32/00, C22C 27/04, C22C 1/04, C22C 1/05, B22F 1/00, B23H 1/06

(54) **ELECTRODE MATERIAL FOR ELECTRIC DISCHARGE MACHINING AND METHOD FOR PRODUCTION THEREOF**

(30) Priority: 11.11.2002 JP 2002326244
(71) Applicant: Sumitomo Electric Industries, Ltd., Osaka 541-0041 (JP)
(72) Inventor: UENISHI, N., c/o SUMITOMO ELECTRIC INDUSTRIES LTD., Itami-shi, Hyogo 664-8611 (JP); GOMA, N., c/o SUMITOMO ELECTRIC INDUSTRIES LTD., Itami-shi, Hyogo 664-8611 (JP); KATOUGI, H., c/o MITSUBISHI DENKI KABUSHIKI KAISHA, Chiyoda-ku, Tokyo 100-8310 (JP); KAMIYA, K., c/o MITSUBISHI DENKI KABUSHIKI KAISHA, Chiyoda-ku, Tokyo 100-8310 (JP)
(74) Representative: Cross, Rupert Edward Blount
(86) International application number: PCT/JP2003/014281
(87) International publication number: WO 2004/044255

(57) **Abstract**

An electrode material for electrical discharge machining made of a W-Cu alloy containing at least 40% by weight of W (1), at most 15% by weight of an additional element or a compound thereof (3), and a balance of Cu (2), contains, as the additional element or the compound thereof, at most 10% by weight of particles selected from an alkali metal element, an alkaline-earth metal element and a rare-earth element, and an oxide, a hydroxide, a nitride, a boride and a sulfide of the elements. For example, the additional element or the compound thereof is an oxide or a hydroxide of each of Ba, Nd and Ce. The particles have a mean particle diameter of less than 3µm or a mean interparticle spacing of at most 20µm. At least 30% of W (1) particles contained in the alloy preferably have a particle diameter of at most 1µm. In addition, not more than 10% by weight of Ni can further be contained. According to the present invention, there can be provided an electrode material for electrical discharge machining which causes less electrode wear and attains higher machining rate, and is excellent in electrical discharge machining property.

## Description

### Technical Field

The present invention relates to an electrode material for electrical discharge machining and its manufacturing method, and more particularly, to an electrode material for a tool electrode mainly used for diesinking electrical discharge machining and its manufacturing method. The present invention is not directed to an electrode material for a cutting wire used for wire-electrical discharge machining.

### Background Art

In electrical discharge machining, there has been a demand for higher machining rate for a workpiece and less wear of an electrode for electrical discharge machining in itself. In addition, since a surface geometry of the electrode for electrical discharge machining is transferred on a workpiece, there has also been a demand for a void-free structure or a structure having as small voids as possible (e.g. at most 4µm depending on the application) on the surface and inside of the electrode.

In order to meet such demands, various electrode materials for electrical discharge machining have been researched and developed. Among them, a W-Cu alloy and a W-Ag alloy, which exploit an advantage of high melting point and high boiling point of W, and high thermal conductivity and high electric conductivity of Cu or Ag, have been used as an electrode material suitable for precision machining and finish machining due to less electrode wear, and as an electrode for electrical discharge machining particularly suitable for a precision machining application and a carbide application for electrical discharge machining.

Regarding the electrodes for electrical discharge machining made of the W-Cu alloy and the W-Ag alloy, respectively, there has been a strong demand for higher efficiency on an actual site of electrical discharge machining. Therefore, an attempt has been made to improve an electrical discharge machining property by further reducing electrode wear and attaining higher machining rate.

As an example, as is described in Japanese Patent-Laying Open Nos. 63-195242 and 50-109595 and others, there is developed an electrode material for electrical discharge machining, in which an alkali metal element such as Na or K, an alkaline-earth metal element such as Sr or Ca, or an oxide thereof is added to an alloy such as W-Cu to lower the alloy's work function and increase the machining rate.

There is no doubt that the electrode material for electrical discharge machining made of the W-Cu alloy which contains an alkali metal element, an alkaline-earth metal element, or an oxide thereof has a lower work function and exhibits improvement in a machining rate, for example. However, the electrical discharge machining property thereof is not always sufficient, and thus further improvement in the electrode's wear and abrasion resistance, and the machining rate has particularly been desired. In addition, some metal components to be added have toxicity or hygroscopicity, which disadvantageously causes inconvenience in handling and difficulty in manufacturing.

In view of such traditional circumstances, the present invention aims to provide an electrode material for electrical discharge machining made of a W-Cu alloy and its manufacturing method. More particularly, the present invention aims to provide an electrode material for electrical discharge machining causing less electrode wear, attaining higher machining rate, and exhibiting a better electrical discharge machining property than the conventional material and its manufacturing method.

Note that the present invention provides an electrode material made of a W-Cu alloy mainly used for diesinking electrical discharge machining, and is not directed to an electrode for wire electrical discharge machining, namely, the so-called cutting wire. The cutting wire is mainly made of pure Cu or pure W while an electrode material according to the present invention is made of a W-Cu alloy, and both are different in composition and manufacturing method. Furthermore, with regard to a cutting wire, not only the machining rate but also the straightness, the strength at a high temperature, and the breaking frequency need to be lowered in its applications. However, the present invention does not aim to satisfy these needs.

### Disclosure of the Invention

In order to attain the object above, the inventors of the present invention have studied in detail an electrical discharge phenomenon of a W-Cu alloy through the experimental production and evaluation thereof. The results show that a stable electrical discharge phenomenon does not occur in the W-Cu alloy because the alloy is composed of a Cu portion and a W portion. In other words, since Cu and W are different in physical property such as thermal conductivity, local inhomogeneity in the W-Cu alloy's composition causes an unstable behavior of arc.

In order to eliminate the problem, various kinds of additional elements and their compounds have repeatedly been under intensive examination. According to the results, when an element with a low work function such as an alkali metal element, an alkaline-earth metal element or a rare-earth element, or an oxide, a hydroxide, a nitride, a boride or a sulfide of these elements is added with its mean particle diameter reduced, a behavior of arc becomes stable. It is recognized that the stable behavior of arc promotes an electrical discharge phenomenon, resulting in improvement in the electrode's wear resistance and electrical discharge machining rate as well, from which the present invention is derived.

More particularly, a first electrode material for electrical discharge machining provided by the present invention is a W-Cu alloy containing not less than 40% by weight of W, not more than 15% by weight of an additional element or a compound thereof, and a balance of Cu. It is characterized in that the material contains, as the additional element or the compound thereof, not more than 10% by weight of at least one selected from an alkali metal element, an alkaline-earth metal element and a rare-earth element, and an oxide, a hydroxide, a nitride, a boride and a sulfide of these elements in particles. The particles have a mean particle diameter of less than 3µm.

Furthermore; it is found that instead of reducing the particle diameter of an additional element with a lower work function such as an alkali metal element, an alkaline-earth metal element or a rare-earth element, or a compound thereof, reducing a spacing between these particles, i.e., an interparticle spacing can provide similar effects. Generally, the use of a fine powder tends to reduce the interparticle spacing. However, if the interparticle spacing is reduced even with the use of larger particles, similar effects can be expected.

Based on such findings, a second electrode material for electrical discharge machining provided by the present invention is a W-Cu alloy containing not less than 40% by weight of W, not more than 15% by weight of an additional element or a compound thereof, and a balance of Cu. It is characterized in that the material contains, as the additional element or the compound thereof, not more than 10% by weight of at least one selected from an alkali metal element, an alkaline-earth metal element and a rare-earth element, and an oxide, a hydroxide, a nitride, a boride and a sulfide of these elements in particles. The particles have a mean interparticle spacing of not more than 20µm.

There can also be provided an electrode material for electrical discharge machining which has properties of both of the above-mentioned first and second electrode materials according to the present invention. More particularly, a third electrode material for electrical discharge machining provided by the present invention is a W-Cu alloy containing not less than 40% by weight of W, not more than 15% by weight of an additional element or a compound thereof, and a balance of Cu. It is characterized in that the material contains, as the additional element or the compound thereof, not more than 10% by weight of at least one selected from an alkali metal element, an alkaline-earth metal element and a rare-earth element, and an oxide, a hydroxide, a nitride, a boride and a sulfide of these elements in particles. The particles have a mean particle diameter of less than 3µm and a mean interparticle spacing of not more than 20µm.

For each of the electrode materials above for electrical discharge machining according to the present invention, the at least one selected from the alkali metal element, the alkaline-earth metal element and the rare-earth element, and the oxide, the hydroxide, the nitride, the boride and the sulfide of these elements in particles preferably has a mean particle diameter of less than 1µm. Also for each of the electrode materials above for electrical discharge machining according to the present invention, the at least one selected from the alkali metal element, the alkaline-earth metal element and the rare-earth element, and the oxide, the hydroxide, the nitride, the boride and the sulfide of these elements in particles preferably has a mean interparticle spacing of not more than 10µm.

For the above-mentioned particles of the additional element or the compound thereof, it is found that when some of the particles have a smaller particle diameter, similar effects can be obtained. More particularly, a fourth electrode material for electrical discharge machining provided by the present invention is a W-Cu alloy containing not less than 40% by weight of W, not more than 15% by weight of an additional element or a compound thereof, and a balance of Cu. It is characterized in that the material contains, as the additional element or the compound thereof, not more than 10% by weight of at least one selected from an alkali metal element, an alkaline-earth metal element and a rare-earth element, and an oxide, a hydroxide, a nitride, a boride and a sulfide of these elements in particles. A content of the particles having a particle diameter of not more than 3µm is at least 0.3% by weight with respect to the entire alloy.

The fourth electrode material for electrical discharge machining according to the present invention contains at least one selected from the alkali metal element, the alkaline-earth metal element and the rare-earth element, and the oxide, the hydroxide, the nitride, the boride and the sulfide of these elements in particles. A content of the particles having a particle diameter of not more than 3µm is preferably at least 0.6% by weight with respect to the entire alloy, or a content of the particles having a particle diameter of not more than 1µm is preferably at least 0.3% by weight with respect to the entire alloy.

Furthermore, for the above-mentioned particles of the additional element or the compound thereof, it is found that when some of the particles have a smaller interparticle spacing, similar effects can also be obtained. More particularly, a fifth electrode material for electrical discharge machining provided by the present invention is a W-Cu alloy containing not less than 40% by weight of W, not more than 15% by weight of an additional element or a compound thereof, and a balance of Cu. It is characterized in that the material contains, as the additional element or the compound thereof, not more than 10% by weight of at least one selected from an alkali metal element, an alkaline-earth metal element and a rare-earth element, and an oxide, a hydroxide, a nitride, a boride and a sulfide of these elements in particles. A content of the particles having an interparticle spacing of not more than 20µm is at least 0.3% by weight with respect to the entire alloy.

The fifth electrode material for electrical discharge machining according to the present invention contains at least one selected from the alkali metal element, the alkaline-earth metal element and the rare-earth element, and the oxide, the hydroxide, the nitride, the boride and the sulfide of these elements in particles. A content of the particles having an interparticle spacing of not more than 10µm is preferably at least 0.3% by weight, more preferably at least 0.7% by weight, with respect to the entire alloy.

For each of the electrode materials above for electrical discharge machining according to the present invention, the at least one selected from the alkali metal element, the alkaline-earth metal element and the rare-earth element, and the oxide, the hydroxide, the nitride, the boride and the sulfide of these elements in particles preferably exists in Cu. Furthermore, the at least one selected from the alkali metal element, the alkaline-earth metal element and the rare-earth element, and the oxide, the hydroxide, the nitride, the boride and the sulfide of these elements in particles preferably exists in some of W particles.

For each of the electrode materials above for electrical discharge machining according to the present invention, the alkali metal element, the alkaline-earth metal element and the rare-earth element, and the oxide, the hydroxide, the nitride, the boride and the sulfide of these elements are preferably at least one of Ba, Nd, Ce, Y, Ca and K, and an oxide and a hydroxide thereof. W particles may contain K. For example, W may be doped with K. W may be doped with other elements such as Al, along with K.

Furthermore, for each of the electrode materials above for electrical discharge machining according to the present invention, the W preferably contains at least 30% by weight of particles having a particle diameter of not more than 1µm with respect to all of the W particles. In addition, not more than 10% by weight ofNi can further be contained instead of a portion of the Cu.

In the present invention, measurement of the particle diameter of the W particles in the W-Cu alloy is implemented as follows: any cross section of the alloy is photographed at 1500-fold magnification through an observation under a scanning electron microscope. The photograph is scaled up 4 times and copied by a copying machine. On the scaled photograph, a line segment having a length of 20cm is arbitrarily drawn. With regard to the W particle crossing the line segment, the length of a portion of the line segment overlapping the particle is measured. The measurement is repeated until the number of measured particles reaches 500. The W particles' mean particle diameter is defined as the mean value of the measurements of 500 particles.

For particles of an alkali metal element, an alkaline-earth metal element or a rare-earth element, or an oxide, a hydroxide, a nitride, a boride or a sulfide of these elements, which are contained in the W-Cu alloy, measurement of the particle diameter thereof is also implemented in a manner similar to that of the W particles by observing the alloy's any cross section under a scanning electron microscope. However, it is noted that the particle diameter is measured by using a photograph obtained at 5000-fold magnification and the particles' mean particle diameter is defined as the mean value of any 500 particles. Each particle's interparticle spacing is determined by measuring a distance between any particle and the particle closest thereto, and the mean interparticle spacing is defined as the mean value of any 500 particles mentioned above.

The measurement of the particle diameter of the particles is implemented by employing the so-called surface analysis. More particularly, the diameter of a particle of a white spot detected through the surface analysis is measured. Considering errors in the analysis, namely, considering the fact that the area on the sample's surface where a characteristic X is to be extracted is enlarged by approximately 1.5µm relative to the area to which an electron beam is applied for the analysis, the particle's diameter is defined as a value calculated by subtracting 3µm from the measurement of the white spot. For example, if the measurement of the white spot is 6µm, the particle diameter is calculated to be 3µm. If it is less than 3µm, the particle is regarded as a small particle having a diameter of less than 1µm. If the white spot is observed as an ellipse, the minor axis thereof is measured to determine the particle diameter. The mean particle diameter is determined by an arithmetic mean of the diameters of the particles measured as such.

According to the present invention, for an electrode material for electrical discharge machining made of a W-Cu alloy, there can be provided an electrode material for electrical discharge machining mainly used for diesinking electrical discharge machining, which causes less electrode wear, attains higher machining rate, and exhibits a better electrical discharge machining property than the conventional material, and its manufacturing method.

### Brief Description of the Drawings

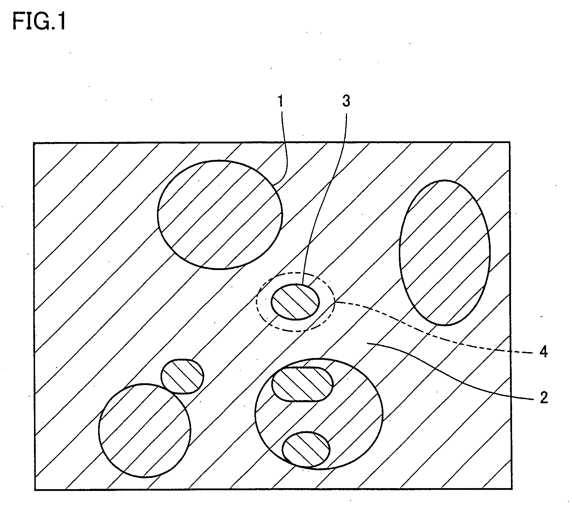

Fig. 1 is a schematic view showing a surface of an electrode material for electrical discharge machining according to the present invention through an observation under a scanning electron microscope.

### Best Modes for Carrying Out the Invention

Referring to Fig. 1, a W-Cu alloy in an electrode material for electrical discharge machining according to the present invention is basically composed of not less than 40% by weight of W (1) and a balance of Cu (2), and contains not more than 15% by weight of an additional element or a compound thereof (3). Particularly for an electrode for diesinking electrical discharge machining, the W concentration is preferably 60-80% by weight when the electrical discharge machining property and manufacturabilitly thereof are considered. In addition to the components above, the W-Cu alloy also contains an inevitable impurity. A dash-double dot line (4) in Fig. 1 shows a particle of a white spot detected around the additional element or the compound thereof (3) in conducting the so-called surface analysis.

The electrode material for electrical discharge machining according to the present invention contains, as the additional element or the compound thereof for the W-Cu alloy, at least one of an alkali metal element, an alkaline-earth metal element and a rare-earth element, and an oxide, a hydroxide, a nitride, a boride and a sulfide of these elements. The content of the essential additional element or the compound thereof is not more than 10% by weight, preferably in the range of 0.5-5% by weight. The content thereof exceeding 10% by weight is not preferable because a machinability of an electrode itself for electrical discharge machining is reduced. The total content of the additional element and the compound thereof including the essential additional element or the additional compound in the W-Cu alloy is set to be not more than 15% by weight.

The essential additional element or the additional compound, namely, an alkali metal element, an alkaline-earth metal element or a rare-earth element, or an oxide, a hydroxide, a nitride, a boride or a sulfide thereof exists as particles in the W-Cu alloy. The particles' mean particle diameter is required to be less than 3µm, preferably less than 1µm. If the mean particle diameter of the particles above reaches or exceeds 3µm, the machinability is reduced, and in particular, the electrode's wear resistance is significantly reduced.

Furthermore, for the particles of the essential additional element or the additional compound, such as an alkali metal element, an alkaline-earth metal element or a rare-earth element, or an oxide thereof, when the mean interparticle spacing thereof is decreased, the electrical discharge machining property and the electrode's wear resistance are also improved. The particles' mean interparticle spacing is preferred to be as small as possible. More particularly, it is required to be not more than 20µm, preferably not more than 10µm. This is because the mean interparticle spacing exceeding 20µm exhibits less improvement in the electrode's wear resistance and the machining rate property.

While the above described essential additional element or compound is provided in particles having a mean particle diameter, the element or compound that is provided in particles only some of which have a small diameter can also contribute to an improved electrical discharge machining property and the electrode's wear resistance. In this case, for these particles, the content of the particles having a particle diameter of not more than 3µm is required to be at least 0.3% by weight, preferably at least 0.6% by weight, with respect to the entire alloy. Similarly, for these particles, the content of the particles having a particle diameter of not more than 1µm is also preferred to be at least 0.3% by weight with respect to the entire alloy.

Furthermore, while the above described essential additional element or compound is provided in particles having an interparticle spacing, the element or compound that is provided in particles only some of which have a small interparticle spacing can also contribute to an improved electrical discharge machining property and the electrode's wear resistance. In this case, for these particles, the content of the particles having an interparticle spacing of not more than 20µm is required to be at least 0.3% by weight with respect to the entire alloy. In addition, the content of the particles having an interparticle spacing of not more than 10µm is also preferred to be at least 0.3% by weight, more preferably at least 0.7% by weight, with respect to the entire alloy.

For a method of reducing the particle diameter and the interparticle spacing of the particles made of an alkali metal element, an alkaline-earth metal element or a rare-earth element, or a compound thereof, a method of using a powder with a smaller particle diameter as a source powder, a method of mixing the source powder for longer time and others are easy and preferable. For example, if the time required for mixing is set to be at least three times as long as the typical time, which is approximately 5 hours, dispersion of the particles is improved and thus the mean interparticle spacing can be not more than 20µm. Furthermore, by increasing the concentration of the essential additional element or the additional compound, the mean interparticle spacing can also be decreased.

For a method of obtaining a finer and more uniform dispersion state of the particles, it is effective to use a mixing method by a coprecipitation method, the so-called mechanical alloying method and others, in mixing the source powder. In particular, the mechanical alloying method is effective: either a wet process using a small amount of an organic solvent such as alcohol for a solvent, or a dry process using no solvent may be used. However, the dry process is much more effective, and the typical mechanical alloying method is implemented therewith. Usually, the typical mechanical alloying method is implemented in an atmosphere of Ar gas with moisture and an organic solvent eliminated. Oxygen and nitrogen usually have an adverse effect, and thus the high concentration thereof reduces the effect of mechanical alloying. The mechanical alloying method is not just a method of mixing powders, but a method in which, after a mixing step, each powder particle is made into an alloy powder made of blended powders. This method is generally used for forming a heat-resistant alloy and for obtaining an amorphous powder. The inventors of the present invention have found from the intensive study that this method is effective in improving an electrical discharge machining property. More particularly, by mechanically alloying the particles of at least one selected from an alkali metal element, an alkaline-earth metal element and a rare-earth element, and an oxide, a hydroxide, a nitride, a boride and a sulfide thereof, along with the W powder and the Cu powder with the use of an attritor, a vibrating mill, a ball mill or the like, the particles can be dispersed uniformely and finely in the W-Cu alloy.

For the particles of at least one selected from an alkali metal element, an alkaline-earth metal element and a rare-earth element, and an oxide, a hydroxide, a nitride, a boride and a sulfide thereof, the mechanical alloying method can provide the particle diameter thereof of not more than 0.5µm and the interparticle spacing thereof of not more than 5µm. Furthermore, the effective mechanical alloying can provide the particle diameter of approximately 0.2µm and the interparticle spacing of not more than 2µm. With the mechanical alloying method, it is particularly easy to obtain fine W particles. In other words, through mechanical alloying and the following heat treatment including sintering, fine W particles can be formed. The sintering method may be a method of extruding or hot isostatic pressing (HIP). As the particles of the additional element and the additional compound are made more uniform and finer, their property for serving as an electrode for electrical discharge machining becomes much more preferable.

For particles of at least one selected from an alkali metal element, an alkaline-earth metal element and a rare-earth element, and an oxide, a hydroxide, a nitride, a boride and a sulfide of these elements, their effect is more effectively exhibited when in Cu rather than in W particles. For example, it is preferable that an element such as Ce or Ba, or a compound thereof is dispersed in Cu without being made into a complex compound with W. By not using a powder of a compound of these elements with W, but by using a powder of these elements and a compound of the elements as a source powder, the particles of the additional element or the compound thereof can be dispersed in Cu.

Furthermore, with the mechanical alloying method, the particles of at least one selected from an alkali metal element, an alkaline-earth metal element and a rare-earth element, and an oxide, a hydroxide, a nitride, a boride and a sulfide of these elements can be dispersed in Cu and in a W particle depending on their processing condition. Depending on the condition of mechanical alloying, the particles can be uniformly dispersed in Cu and in a W particle. However, even if the particles are dispersed in a portion of the structure in Cu and/or in a W particle, a property for serving as an electrode for electrical discharge machining can be improved. It is not a requirement to make a compound of the particles with W and Cu. It is sufficient to put the particles in a dispersed state.

Therefore, for each of the electrode materials for electrical discharge machining according to the present invention, particles of at least one selected from an alkali metal element, an alkaline-earth metal element and a rare-earth element, and an oxide, a hydroxide, a nitride, a boride and a sulfide of these elements preferably exist in Cu in a dispersed state. Regarding the dispersion thereof among W particles, particles of at least one of these additional elements and additional compounds are preferably contained in at least some of W particles, and need not be contained in all the W particles. Furthermore, regarding an individual particle, the particles of at least one of these additional elements and additional compounds need not be dispersed throughout a W particle. Localized dispersion thereof in a W particle can improve the property.

Among an alkali metal element, an alkaline-earth metal element and a rare-earth element for serving as the essential additional element, Na and K in the alkali metal element, Ca, Sr and Ba in the alkaline-earth metal element, and Y, Ce and Nd in the rare-earth element exhibit a tendency in which the particle diameter and the interparticle spacing thereof are easily and significantly reduced. However, in addition to these elements above, an element with smaller work function and smaller electro-negativity is effective in improving the electrode's wear resistance and machining rate. In particular, Ba, Nd, Ce, Y, Ca and K, and an oxide and a hydroxide thereof are superior. Generally, by adding an element with smaller electro-negativity, a larger effect is exhibited. In the alkaline-earth metal element, an element with the atomic weight equal to and larger than that of Ba is effective in particular.

For particles of at least one selected from an alkali metal element, an alkaline-earth metal element and a rare-earth element, and an oxide, a hydroxide, a nitride, a boride and a sulfide of these elements, when the particle diameter and the mean particle diameter, and the interparticle spacing and the mean interparticle spacing are reduced, and at the same time when W particles are made finer, local nonuniformity of the W-Cu alloy structure is further reduced, and the electrode's wear resistance can further be improved. For the purpose, it is preferable to blend at least 30% by weight of W particles having a particle diameter of not more than 1µm with respect to all the W particles. In order to obtain fine W particles, the above-mentioned mechanical alloying method is particularly effective in addition to the method of using fine W particles as a source powder. In the case of the alloy series according to the present invention, a powder is reduced with hydrogen at the temperature of at least 500°C to eliminate moisture and an organic solvent, and then subjected to the mechanical alloying process in an atmosphere of Ar. In the process, the oxygen concentration in the atmosphere is required to be not more than 60ppm. The concentration exceeding 60ppm disturbs a balance of adhesion and milling which are to occur between the particles during mechanical alloying, and thus a favorable microstructure cannot be obtained.

Some elements from an alkali metal element, an alkaline-earth metal element, a rare-earth element and the like, which serve as the essential additional element, have an inhibitory effect on sinterability. In this case, it is preferable to add Ni, which has a promoting effect on sinterability, to the alloy instead of a portion of Cu (i.e., the Ni is not included in the additional element above). The content ofNi in the W-Cu alloy exceeding 10% by weight is not preferable because Ni lowers an electric conductivity and degrades an electrical discharge machining property.

In order to manufacture an electrode material for electrical discharge machining made of the W-Cu alloy according to the present invention, a source powder containing a Cu powder and/or a W powder, and a powder of at least one selected from an alkali metal element, an alkaline-earth metal element and a rare-earth element, and an oxide, a hydroxide, a nitride, a boride and a sulfide of these elements is mixed in a typical manner, or more preferably, by using a mixing method by a coprecipitation method, or a mechanical alloying method in which the powder is strongly mixed in a dry process.

Therefore, by using the mixed source powder as described above, an electrode material for electrical discharge machining made of the W-Cu alloy can be manufactured through the typical method of sintering or infiltration, which will be described below. For the sintering method, a Cu powder is mixed with a raw material containing a BaO powder having a mean particle diameter of 1 µm and a W powder containing at least 30% by weight of powder having a mean particle diameter of not more than 1µm, for example, in order to obtain a desired final composition of the alloy. The mixed powders are molded, and then heated and sintered in an atmosphere of hydrogen at a temperature equal to or above the melting point of Cu.

For the infiltrating method, in mixing the source powders, a composition excluding Cu or a composition of W-2 to 3% by weight of Cu at, for example, is used instead of the alloy's final composition. The mixed powders are then molded. The molded body is infiltrated with Cu at a temperature equal to or above the melting point of Cu by being dipped in a liquid of molten Cu, for example, and sintered at the same time. There may be another method in which the molded body is sintered and then the sintered body is infiltrated with Cu, and the like.

### Example 1

For a source powder, a W powder having a particle size distribution of 0.5-16µm, a Cu powder, and BaO powders having mean particle diameters of 1.1 µm and 3.0µm were used. These powders were blended and mixed with an attritor for 5 hours. The mixed powder obtained was molded into a molded body, which was brought into contact with a material made by molding a pure Cu powder, then heated in an atmosphere of hydrogen at 1200°C for sintering, and infiltrated with Cu at the same time to produce Samples 1-3 made of respective W-Cu alloys having a final composition of W-30% by weight of Cu-0.77% by weight of BaO as described in Table 1.

Furthermore, Samples 4 and 5 were produced under the same manufacturing condition as Samples 1-3 above except that BaO powders having mean particle diameters of 0.6µm and 4.0µm were used and that the powders were mixed for 15 hours to be dispersed more uniformly to decrease the interparticle spacing. For the W-Cu alloy's final composition, Sample 4 had a composition of W-31% by weight of Cu-2.4% by weight of BaO, whose powder had a mean particle diameter of 0.6µm, and Sample 5 had a composition of W-32% by weight of Cu-4.15% by weight of BaO, whose powder had a mean particle diameter of 4.0µm. Furthermore, Sample 6 made of a W-Cu alloy was produced under the same condition as Samples 1-3 above except that an Ni powder was further blended with the W powder, the Cu powder, and a BaO powder having a mean particle diameter of 0.9µm. Sample 6 had a final alloy composition of W-30% by weight of Cu-0.77% by weight of BaO-1.2% by weight ofNi.

Furthermore, as a comparative example, Sample 7 made of a W-Cu alloy was produced under the same condition as Samples 1-3 above except that a BaO powder having a mean particle diameter of 4.4µm was used. Sample 7 had the final alloy composition of W-30% by weight of Cu-0.77% by weight of BaO, which was the same as Samples 1-3.

For each of the W-Cu alloys in Samples 1-7 produced as such, the cross section thereof was observed under a scanning electron microscope to obtain a mean particle diameter and a mean interparticle spacing of the BaO particles, and a ratio of W particles having a particle diameter of not more than 1µm to all the W particles (weight %). The obtained results were shown in Table 1 below. Furthermore, by using an electrode formed of each of the W-Cu alloys in Samples 1-7, an electrical discharge machining property thereof was evaluated. More particularly, an electrode of 15x15mm, which served as a cathode, was positioned to face a workpiece (article to be processed) made of a cemented carbide alloy having a composition of WC-10 to 15% by weight of Co, such that only the electrode's 15x5mm area was opposed thereto. After diesinking electrical discharge machining was performed to the depth of 4mm, the electrode's wearout rate and the machining rate were evaluated. The electrode's wearout rate was calculated as a fraction whose denominator was the workpiece's machined volume and whose numerator was the electrode's worn volume. The machining rate was the workpiece's machined volume of per minute shown in numerical value. The results obtained were also shown in Table 1 below.

**Table 1**

| Sample | oxide (BaO) particle | | ≤1µm W particle (%) | electrode's wearout rate (%) | machining rate (mm³/min) |
|---|---|---|---|---|---|
| | mean particle diameter (µm) | mean interparticle spacing (µm) | | | |
| 1 | 0.9 | 5 | 25 | 9.6 | 2.88 |
| 2 | 0.9 | 5 | 40 | 9.3 | 2.97 |
| 3 | 2.5 | 14 | 25 | 12.0 | 2.84 |
| 4 | 0.5 | 2 | 25 | 8.3 | 3.08 |
| 5 | 3.3 | 6 | 25 | 9.2 | 2.86 |
| 6 | 0.9 | 5 | 25 | 9.8 | 2.84 |
| 7* | 3.6 | 21 | 25 | 14.2 | 2.80 |

| | | | | | |
|---|---|---|---|---|---|
| Note: Sample to which * is attached is a comparative example. The alloy in Sample 6 contains Ni. | | | | | |

As can be seen from the results shown in Table 1, a smaller mean particle diameter and/or a smaller mean interparticle spacing of the BaO particles contained in the W-Cu alloy provide better electrical discharge machining property, and particularly, better electrode's wear resistance. On the contrary, as shown, Sample 7 as a comparative example, whose BaO particles had a mean particle diameter of more than 3µm, has a poor electrical discharge machining property, and particularly, the electorde's wear resistance is significantly reduced.

### Example 2

The same W powder and Cu powder as Example 1, and Nd₂O₃ powders or CeO₂ powders having mean particle diameters of 0.6µm, 1.1 µm and 4.4µm were used. These powders were blended, and the blended powders were mixed with an attritor for 5 hours or 15 hours. As in Example 1, Samples 8-10 were produced with the Nd₂O₃ powders, and Samples 11-13 were produced with the CeO₂ powders. For the W-Cu alloy's final composition, Sample 8 had a composition of W-30% by weight of Cu-0.7% by weight of Nd₂O₃, Sample 9 had a composition of W-30% by weight of Cu- 2.1% by weight of Nd₂O₃, Sample 10 had a composition of W-30% by weight of Cu-0.7% by weight of Nd₂O₃, Sample 11 had a composition of W-30% by weight of Cu-0.67% by weight of CeO₂, Sample 12 had a composition of W-30% by weight of Cu-2.0% by weight of CeO₂, and Sample 13 had a composition of W-30% by weight of Cu-0.7% by weight of CeO₂.

For each of the W-Cu alloys in Samples 8-13 obtained, the cross section thereof was observed under a scanning electron microscope to obtain a mean particle diameter and a mean interparticle spacing of Nd₂O₃ or CeO₂ particles, and a ratio of W particles having a particle diameter of not more than 1µm to all the W particles (weight %). The obtained results were shown in Table 2 below. Furthermore, by using an electrode formed of each of the W-Cu alloys in Samples 8-13, an electrical discharge machining property thereof was evaluated as in Example 1. The results were also shown in Table 2.

**Table 2**

| Sample | oxide (Nd2O3 or CeO2) particle | | | | ≤1µm W particle (%) | electrode's wearout rate (%) | machining rate (mm³/min) |
|---|---|---|---|---|---|---|---|
| | mean particle diameter (µm) | | interparticle spacing (µm) | | | | |
| 8 | Nd₂O₃ | 0.9 | Nd₂O₃ | 5 | 20 | 9.9 | 2.85 |
| 9 | Nd₂O₃ | 0.5 | Nd₂O₃ | 2 | 20 | 8.5 | 3.05 |
| 10* | Nd₂O₃ | 3.6 | Nd₂O₃ | 21 | 20 | 15.2 | 2.78 |
| 11 | CeO₂ | 0.9 | CeO₂ | 5 | 15 | 10.3 | 2.81 |
| 12 | CeO₂ | 0.5 | CeO₂ | 2.1 | 15 | 8.6 | 3.02 |
| 13* | CeO₂ | 3.6 | CeO₂ | 22 | 15 | 15.9 | 2.76 |

| | | | | | | | |
|---|---|---|---|---|---|---|---|
| Note: Samples to which * is attached are comparative examples. | | | | | | | |

As can be seen from the results shown in Table 2, in each case where an oxide contained in the W-Cu alloy is Nd₂O₃ or CeO₂, a smaller mean particle diameter and/or a smaller mean interparticle spacing provide better electrical discharge machining property. On the contrary, in Samples 10 and 13 serving as comparative examples whose oxide particles had mean particle diameters of more than 3µm, the electorde's wear resistance is significantly reduced in particular as shown.

### Example 3

With the same method as Example 1, Samples 14-18 were produced with the final composition of W-30% by weight of Cu-0.77% by weight of BaO. As shown in Table 3 below, the samples had respective ratios of BaO particles having a particle diameter of not more than 3µm (not more than 1µm in Sample 17) to the entire alloy. Furthermore, Sample 19 was also produced by using Sr instead of Ba, with the final composition of W-30% by weight of Cu-0.77% by weight of as in Samples 14-18. For each of the W-Cu alloys in the obtained samples, a ratio of BaO or SrO particles having a particle diameter of not more than 3µm (not more than 1µm in Sample 17) to the entire alloy (weight %), and a ratio of W particles having a particle diameter of not more than 1µm to all the W particles (weight %) were determined as in Sample 1. The electrode's wearout rate and the machining rate were evaluated as well. The results were shown in Table 3 below.

**Table 3**

| Sample | ≤3 µm oxide particle (%) | ≤1µm W particle (%) | electrode's wearout rate (%) | machining rate (mm³/min) |
|---|---|---|---|---|
| 14 | 0.33 (BaO) | 35 | 13.2 | 2.82 |
| 15 | 0.62 (BaO) | 35 | 10.1 | 2.91 |
| 16 | 1.25 (BaO) | 35 | 8.8 | 3.02 |
| 17 | 0.33 (BaO) | 35 | 9.4 | 2.94 |
| 18* | 0.24 (BaO) | 35 | 16.3 | 2.58 |
| 19 | 0.33 (SrO) | 35 | 14.2 | 2.62 |

| | | | | |
|---|---|---|---|---|
| Note: Sample to which * is attached is a comparative example. A BaO particle in Sample 17 is not more than 1µm. | | | | |

As can be seen from the results shown in Table 3, a higher ratio of BaO or SrO particles having a particle diameter of not more than 3µm to all the BaO or SrO particles contained in the W-Cu alloy provides better electrical discharge machining property. For the W-Cu alloys in all the produced samples, an observation showed that BaO particles and SrO particles were dispersed in Cu.

### Example 4

With the same method as Example 1, Samples 20-23 were produced with the final composition of W-30% by weight of Cu-0.77% by weight of BaO. The samples had respective ratios of BaO particles having interparticle spacings of not more than 20µm and not more than 10µm to the entire alloy (weight%) as shown in Table 4 below. Sample 22 was a powder produced by the mechanical alloying method. More particularly, Sample 22 was formed under the same processing condition as other samples except that powders were mixed with an attritor as in Example 1, then reduced to eliminate moisture and an organic solvent, and subjected to a mechanical alloying process again with the attritor in an atmosphere of Ar, at an oxide concentration of not more than 56ppm, at the agitator's rotation speed of 200rpm for 60 hours. For each of the W-Cu alloys in the obtained samples, ratios of BaO particles having interparticle spacings of not more than 20µm and not more than 10µm to the entire alloy (weight %), and a ratio of W particles having a particle diameter of not more than 1µm to all the W particles (weight %) were determined as in Example 1. The electrode's wearout rate and the machining rate were evaluated as well. The results were shown in Table 4 below.

**Table 4**

| Sample | BaO particle (%) | | ≤1µm W particle (%) | electrode's wearout rate (%) | machining rate (mm³/min) |
|---|---|---|---|---|---|
| | ≤20µm | ≤10µm | | | |
| 20 | 0.32 | 0.15 | 30 | 12.8 | 2.83 |
| 21 | 0.60 | 0.32 | 30 | 10.1 | 2.88 |
| 22 | 1.10 | 0.72 | 30 | 9.7 | 2.90 |
| 23* | 0.23 | 0.10 | 30 | 15.1 | 2.68 |

| | | | | | |
|---|---|---|---|---|---|
| Note: Sample to which * is attached is a comparative example. | | | | | |

As can be seen from the results shown in Table 4, for the BaO particles contained in the W-Cu alloys, a higher ratio of particles having an interparticle spacing of not more than 20µm (weight %), and furthermore a higher ratio of particles having an interparticle spacing of not more than 10µm (weight %) provide better electrical discharge machining property. For the W-Cu alloys in all the produced samples, an observation showed that BaO particles were dispersed in Cu.

### Industrial Applicability

The present invention is used for an electrode material for electrical discharge machining, more particularly, an electrode material for diesinking electrical discharge machining.

## Claims

1. An electrode material for electrical discharge machining made of a W-Cu alloy containing at least 40% by weight of W (1), at most 15% by weight of one of an additional element and a compound thereof (3), and a balance of Cu (2), containing, as one of said additional element and said compound thereof (3), at most 10% by weight of at least one selected from an alkali metal element, an alkaline-earth metal element and a rare-earth element, and an oxide, a hydroxide, a nitride, a boride and a sulfide of said elements in particles having a mean particle diameter of less than 3µm.

2. The electrode material for electrical discharge machining according to claim 1, wherein said at least one selected from said alkali metal element, said alkaline-earth metal element and said rare-earth element, and said oxide, said hydroxide, said nitride, said boride and said sulfide of said elements in particles has a mean particle diameter of less than 1µm.

3. The electrode material for electrical discharge machining according to claim 1, wherein said at least one selected from said alkali metal element, said alkaline-earth metal element and said rare-earth element, and said oxide, said hydroxide, said nitride, said boride and said sulfide of said elements in particles has a mean interparticle spacing of at most 10µm.

4. The electrode material for electrical discharge machining according to claim 1, wherein said at least one selected from said alkali metal element, said alkaline-earth metal element and said rare-earth element, and said oxide, said hydroxide, said nitride, said boride and said sulfide of said elements in particles exists in the Cu (2).

5. The electrode material for electrical discharge machining according to claim 1, wherein said at least one selected from said alkali metal element, said alkaline-earth metal element and said rare-earth element, and said oxide, said hydroxide, said nitride, said boride and said sulfide of said elements in particles exists in some of W (1) particles.

6. The electrode material for electrical discharge machining according to claim 1, wherein said alkali metal element, said alkaline-earth metal element and said rare-earth element, and said oxide, said hydroxide, said nitride, said boride and said sulfide of said elements are at least one of Ba, Nd, Ce, Y, Ca and K, and an oxide and a hydroxide thereof.

7. The electrode material for electrical discharge machining according to claim 1, wherein said W (1) contains at least 30% by weight of particles having a particle diameter of at most 1µm with respect to all of W (1) particles.

8. The electrode material for electrical discharge machining according to claim 1, wherein at most 10% by weight ofNi is further contained instead of a portion of said Cu (2).

9. A method of manufacturing the electrode material for electrical discharge machining recited in claim 1, using a source powder containing a Cu powder and/or a W powder, and a powder of at least one selected from an alkali metal element, an alkaline-earth metal element and a rare-earth element, and an oxide, a hydroxide, a nitride, a boride and a sulfide of said elements, said source powder being mixed by using one of a mechanical alloying method, a method of using a fine source powder, and a coprecipitation method.

10. An electrode material for electrical discharge machining made of a W-Cu alloy containing at least 40% by weight of W (1), at most 15% by weight of one of an additional element and a compound thereof (3), and a balance of Cu (2), containing, as one of said additional element and said compound thereof (3), at most 10% by weight of at least one selected from an alkali metal element, an alkaline-earth metal element and a rare-earth element, and an oxide, a hydroxide, a nitride, a boride and a sulfide of said elements in particles having a mean interparticle spacing of at most 20µm.

11. The electrode material for electrical discharge machining according to claim 10, wherein said at least one selected from said alkali metal element, said alkaline-earth metal element and said rare-earth element, and said oxide, said hydroxide, said nitride, said boride and said sulfide of said elements in particles has a mean particle diameter of less than 1µm.

12. The electrode material for electrical discharge machining according to claim 10, wherein said at least one selected from said alkali metal element, said alkaline-earth metal element and said rare-earth element, and said oxide, said hydroxide, said nitride, said boride and said sulfide of said elements in particles has a mean interparticle spacing of at most 10µm.

13. The electrode material for electrical discharge machining according to claim 10, wherein said at least one selected from said alkali metal element, said alkaline-earth metal element and said rare-earth element, and said oxide, said hydroxide, said nitride, said boride and said sulfide of said elements in particles exists in the Cu (2).

14. The electrode material for electrical discharge machining according to claim 10, wherein said at least one selected from said alkali metal element, said alkaline-earth metal element and said rare-earth element, and said oxide, said hydroxide, said nitride, said boride and said sulfide of said elements in particles exists in some of W (1) particles.

15. The electrode material for electrical discharge machining according to claim 10, wherein said alkali metal element, said alkaline-earth metal element and said rare-earth element, and said oxide, said hydroxide, said nitride, said boride and said sulfide of said elements are at least one ofBa, Nd, Ce, Y, Ca and K, and an oxide and a hydroxide thereof.

16. The electrode material for electrical discharge machining according to claim 10, wherein said W (1) contains at least 30% by weight of particles having a particle diameter of at most 1µm with respect to all of W (1) particles.

17. The electrode material for electrical discharge machining according to claim 10, wherein at most 10% by weight ofNi is further contained instead of a portion of said Cu (2).

18. A method of manufacturing the electrode material for electrical discharge machining recited in claim 10, using a source powder containing a Cu powder and/or a W powder, and a powder of at least one selected from an alkali metal element, an alkaline-earth metal element and a rare-earth element, and an oxide, a hydroxide, a nitride, a boride and a sulfide of said elements, said source powder being mixed by using one of a mechanical alloying method, a method of using a fine source powder, and a coprecipitation method.

19. An electrode material for electrical discharge machining made of a W-Cu alloy containing at least 40% by weight of W (1), at most 15% by weight of one of an additional element and a compound thereof (3), and a balance of Cu (2), containing, as one of said additional element and said compound thereof (3), at most 10% by weight of at least one selected from an alkali metal element, an alkaline-earth metal element and a rare-earth element, and an oxide, a hydroxide, a nitride, a boride and a sulfide of said elements in particles having a mean particle diameter of less than 3µm and a mean interparticle spacing of at most 20µm.

20. The electrode material for electrical discharge machining according to claim 19, wherein said at least one selected from said alkali metal element, said alkaline-earth metal element and said rare-earth element, and said oxide, said hydroxide, said nitride, said boride and said sulfide of said elements in particles has a mean particle diameter of less than 1µm.

21. The electrode material for electrical discharge machining according to claim 19, wherein said at least one selected from said alkali metal element, said alkaline-earth metal element and said rare-earth element, and said oxide, said hydroxide, said nitride, said boride and said sulfide of said elements in particles has a mean interparticle spacing of at most 10µm.

22. The electrode material for electrical discharge machining according to claim 19, wherein said at least one selected from said alkali metal element, said alkaline-earth metal element and said rare-earth element, and said oxide, said hydroxide, said nitride, said boride and said sulfide of said elements in particles exists in the Cu (2).

23. The electrode material for electrical discharge machining according to claim 19, wherein said at least one selected from said alkali metal element, said alkaline-earth metal element and said rare-earth element, and said oxide, said hydroxide, said nitride, said boride and said sulfide of said elements in particles exists in some of W (1) particles.

24. The electrode material for electrical discharge machining according to claim 19, wherein said alkali metal element, said alkaline-earth metal element and said rare-earth element, and said oxide, said hydroxide, said nitride, said boride and said sulfide of said elements are at least one of Ba, Nd, Ce, Y, Ca and K, and an oxide and a hydroxide thereof

25. The electrode material for electrical discharge machining according to claim 19, wherein said W (1) contains at least 30% by weight of particles having a particle diameter of at most 1µm with respect to all of W (1) particles.

26. The electrode material for electrical discharge machining according to claim 19, wherein at most 10% by weight ofNi is further contained instead of a portion of said Cu (2).

27. A method of manufacturing the electrode material for electrical discharge machining recited in claim 19, using a source powder containing a Cu powder and/or a W powder, and a powder of at least one selected from an alkali metal element, an alkaline-earth metal element and a rare-earth element, and an oxide, a hydroxide, a nitride, a boride and a sulfide of said elements, said source powder being mixed by using one of a mechanical alloying method, a method of using a fine source powder, and a coprecipitation method.

28. An electrode material for electrical discharge machining made of a W-Cu alloy containing at least 40% by weight of W (1), at most 15% by weight of one of an additional element and a compound thereof (3), and a balance of Cu (2), containing, as one of said additional element and said compound thereof (3), at most 10% by weight of at least one selected from an alkali metal element, an alkaline-earth metal element and a rare-earth element, and an oxide, a hydroxide, a nitride, a boride and a sulfide of said elements in particles, wherein a content of said particles having a particle diameter of at most 3µm is at least 0.3% by weight with respect to the entire alloy.

29. The electrode material for electrical discharge machining according to claim 28, containing said at least one selected from said alkali metal element, said alkaline-earth metal element and said rare-earth element, and said oxide, said hydroxide, said nitride, said boride and said sulfide of said elements in particles, wherein a content of said particles having a particle diameter of at most 3µm is at least 0.6% by weight with respect to the entire alloy.

30. The electrode material for electrical discharge machining according to claim 28, containing said at least one selected from said alkali metal element, said alkaline-earth metal element and said rare-earth element, and said oxide, said hydroxide, said nitride, said boride and said sulfide of said elements in particles, wherein a content of said particles having a particle diameter of at most 1µm is at least 0.3% by weight with respect to the entire alloy.

31. The electrode material for electrical discharge machining according to claim 28, wherein said at least one selected from said alkali metal element, said alkaline-earth metal element and said rare-earth element, and said oxide, said hydroxide, said nitride, said boride and said sulfide of said elements in particles exists in the Cu (2).

32. The electrode material for electrical discharge machining according to claim 28, wherein said at least one selected from said alkali metal element, said alkaline-earth metal element and said rare-earth element, and said oxide, said hydroxide, said nitride, said boride and said sulfide of said elements in particles exists in some of W (1) particles.

33. The electrode material for electrical discharge machining according to claim 28, wherein said alkali metal element, said alkaline-earth metal element and said rare-earth element, and said oxide, said hydroxide, said nitride, said boride and said sulfide of said elements are at least one of Ba, Nd, Ce, Y, Ca and K, and an oxide and a hydroxide thereof.

34. The electrode material for electrical discharge machining according to claim 28, wherein said W (1) contains at least 30% by weight of particles having a particle diameter of at most 1µm with respect to all of W (1) particles.

35. The electrode material for electrical discharge machining according to claim 28, wherein at most 10% by weight of Ni is further contained instead of a portion of said Cu (2).

36. A method of manufacturing the electrode material for electrical discharge machining recited in claim 28, using a source powder containing a Cu powder and/or a W powder, and a powder of at least one selected from an alkali metal element, an alkaline-earth metal element and a rare-earth element, and an oxide, a hydroxide, a nitride, a boride and a sulfide of said elements, said source powder being mixed by using one of a mechanical alloying method, a method of using a fine source powder, and a coprecipitation method.

37. An electrode material for electrical discharge machining made of a W-Cu alloy containing at least 40% by weight of W (1), at most 15% by weight of one of an additional element and a compound thereof (3), and a balance of Cu (2), containing, as one of said additional element and said compound thereof (3), at most 10% by weight of at least one selected from an alkali metal element, an alkaline-earth metal element and a rare-earth element, and an oxide, a hydroxide, a nitride, a boride and a sulfide of said elements in particles, wherein a content of said particles having an interparticle spacing of at most 20µm is at least 0.3% by weight with respect to the entire alloy.

38. The electrode material for electrical discharge machining according to claim 37, containing said at least one selected from said alkali metal element, said alkaline-earth metal element and said rare-earth element, and said oxide, said hydroxide, said nitride, said boride and said sulfide of said elements in particles, wherein a content of said particles having an interparticle spacing of at most 10µm is at least 0.3% by weight with respect to the entire alloy.

39. The electrode material for electrical discharge machining according to claim 37, containing said at least one selected from said alkali metal element, said alkaline-earth metal element and said rare-earth element, and said oxide, said hydroxide, said nitride, said boride and said sulfide of said elements in particles, wherein a content of said particles having an interparticle spacing of at most 10µm is at least 0.7% by weight with respect to the entire alloy.

40. The electrode material for electrical discharge machining according to claim 37, wherein said at least one selected from said alkali metal element, said alkaline-earth metal element and said rare-earth element, and said oxide, said hydroxide, said nitride, said boride and said sulfide of said elements in particles exists in the Cu (2).

41. The electrode material for electrical discharge machining according to claim 37, wherein said at least one selected from said alkali metal element, said alkaline-earth metal element and said rare-earth element, and said oxide, said hydroxide, said nitride, said boride and said sulfide of said elements in particles exists in some of W (1) particles.

42. The electrode material for electrical discharge machining according to claim 37, wherein said alkali metal element, said alkaline-earth metal element and said rare-earth element, and said oxide, said hydroxide, said nitride, said boride and said sulfide of said elements are at least one of Ba, Nd, Ce, Y, Ca and K, and an oxide and a hydroxide thereof.

43. The electrode material for electrical discharge machining according to claim 37, wherein said W (1) contains at least 30% by weight of particles having a particle diameter of at most 1µm with respect to all of W (1) particles.

44. The electrode material for electrical discharge machining according to claim 37, wherein at most 10% by weight ofNi is further contained instead of a portion of said Cu (2).

45. A method of manufacturing the electrode material for electrical discharge machining recited in claim 37, using a source powder containing a Cu powder and/or a W powder, and a powder of at least one selected from an alkali metal element, an alkaline-earth metal element and a rare-earth element, and an oxide, a hydroxide, a nitride, a boride and a sulfide of said elements, said source powder being mixed by using one of a mechanical alloying method, a method of using a fine source powder, and a coprecipitation method.
